# EUROPÄISCHE PATENTSCHRIFT

(11) **EP 2 705 265 B1**
(45) Veröffentlichungstag und Bekanntmachung des Hinweises auf die Patenterteilung: **27.05.2015**
(21) Anmeldenummer: 12702534.4
(22) Anmeldetag: 03.02.2012
(51) Int. Cl.: F16C 33/60

(54) **LAGERRING FÜR EIN RADIALWÄLZLAGER, INSBESONDERE FÜR EIN ZYLINDERROLLEN- ODER NADELLAGER**
BEARING RING FOR A RADIAL ROLLING BEARING, IN PARTICULAR FOR A CYLINDRICAL ROLLER BEARING OR NEEDLE BEARING
BAGUE DE ROULEMENT POUR UN ROULEMENT RADIAL, EN PARTICULIER POUR UN ROULEMENT À ROULEAUX CYLINDRIQUES OU À AIGUILLES

(30) Priorität: 03.05.2011 DE 102011075157
(43) Veröffentlichungstag der Anmeldung: 12.03.2014
(73) Patentinhaber: Schaeffler Technologies AG & Co. KG, 91074 Herzogenaurach (DE)
(72) Erfinder: AUST, Jan-Rene, 91058 Erlangen (DE); SCHÄFERS, Heinz, 91056 Erlangen (DE); FICK, Matthias, 91220 Schnaittach (DE)
(86) Internationale Anmeldenummer: PCT/EP2012/051869
(87) Internationale Veröffentlichungsnummer: WO 2012/150049

(56) Entgegenhaltungen:
- DE-A1- 3 411 223
- DE-U- 1 818 278
- DE-U- 6 800 671
- FR-A- 1 491 128
- US-A- 4 162 109

## Beschreibung

### Gebiet der Erfindung

Die Erfindung betrifft einen Lagerring für ein Radialwälzlager, welcher an einer seiner radialen Mantelflächen eine Laufbahn für einen Satz vollrolliger oder durch einen Käfig geführter zylindrischer Wälzkörper aufweist und an dessen axialen Stirnflächen ein oder zwei die Laufbahn der Wälzkörper axial begrenzende/r Führungsbord/e durch Kleben befestigt ist/sind, und sie insbesondere vorteilhaft an Lagerringen für Zylinderrollen- oder Nadellagern realisierbar.

### Hintergrund der Erfindung

In der Wälzlagertechnik ist es allgemein bekannt, dass die Borde an den Lagerringen von Zylinderrollen- oder Nadellagern in der Regel als axiale Führung für die auf den Mantelflächen der Lagerringe abrollenden Wälzkörper dienen. Üblicherweise sind diese Borde einstückig mit den Lagerringen ausgebildet und werden durch eine spanabhebende Bearbeitung des Lagerrings hergestellt. Da-neben ist es auch bereits seit längerem bekannt, die Borde als separate Bauteile zu fertigen und anschließend beispielsweise durch Schweißen, Löten oder auch durch Kleben am Lagerring zu befestigen.

Ein gattungsbildender Wälzlagerlaufring mit angeklebten Führungsborden ist beispielsweise aus der DE 41 33 442 A1 bekannt. Bei diesem Wälzlagerlaufring sind die mit ebenen Seitenflächen ausgebildeten Führungsborde über einen den Wälzkörpern benachbarten Bund unmittelbar am Wälzlagerlaufring abgestützt, wobei sich an dem den Wälzkörpern abgewandten Umfang des Bundes ein kreisringförmiger Spalt zur Aufnahme des Klebemittels anschließt. Weiterhin ist aus der DE 102 00 811 A1 ein Wälzlagerring bekannt, dessen Ringkörper entweder im Bereich seiner axialen Stirnflächen oder im Bereich seiner Lauffläche mit den jeweils gegenüberliegenden Anlageflächen zweier Führungsborde verklebt ist. Dabei weist die Stirn- oder Lauffläche des Ringkörpers lokal mehrere durch Materialverdrängung hergestellte Vertiefungen sowie diese Vertiefungen umschließende Erhebungen auf, an denen die Anlageflächen der Führungsborde anliegen, so dass zwischen dem Ringkörper und den Führungs-borden ein konstanter Spalt zur Aufnahme eines Klebstoffs entsteht.

Aus der US 4 162 109 A ist ebenfalls ein Wälzlagerring bekannt dessen Borde angeklebt sind.

Durch die DE 76 03 570 U ist darüber hinaus auch ein Wälzlagerlaufring mit angeklebten Führungsborden bekannt, welche unter Zwischenlage einer Klebefolie aus aushärtenden, vernetzbaren Harzen, z. B. Phenolharz oder Melaminharz, an dem die Laufbahn aufweisenden Ringkörper befestigt ist.

Der Hauptnachteil aller vorbeschriebenen bekannten Klebeverbindungen zwischen den Führungsborden und den Lagerringen ist es jedoch, dass weder die Lagerringe noch die Führungsborde irgendwelche Mittel zur eindeutigen Positionierung beider Teile zueinander aufweisen, so dass die Führungsborde zur Vermeidung eines Verrutschens aus ihrer exakten Position bis zum Aushärten des Klebstoffs mit gesonderten Hilfsvorrichtungen am Lagerring fixiert werden müssen. Außerdem besteht bei den beiden erstgenannten Ausführungen von Klebeverbindungen die Gefahr, dass überschüssiger Klebstoff auf die Laufbahn der Wälzkörper verdrängt wird und im ausgehärteten Zustand dann eine einwandfreie Funktion des Wälzlagers behindert.

### Aufgabe der Erfindung

Ausgehend von den dargelegten Nachteilen des bekannten Standes der Technik liegt der Erfindung deshalb die Aufgabe zu Grunde, einen Lagerring für ein Radialwälzlager, insbesondere für ein Zylinderrollen- oder Nadellager, zu konzipieren, bei dem die Führungsborde bei der Klebeverbindung eine eindeutige Lagefixierung am Lagerring aufweisen und bei dem ein Verdrängen überschüssigen Klebstoffs auf die Laufbahn der Wälzkörper ausgeschlossen ist.
sigen Klebstoffs auf die Laufbahn der Wälzkörper ausgeschlossen ist.

### Beschreibung der Erfindung

Erfindungsgemäß wird diese Aufgabe bei einem Lagerring nach dem Oberbegriff des Anspruchs 1 derart gelöst, dass jeder Führungsbord einen rechtwinkligen Profilquerschnitt mit einem horizontalen Befestigungsschenkel und einem vertikalen Bordschenkel aufweist und mit seinem horizontalen Befestigungsschenkel jeweils in einer umlaufenden Axialnut in einer axialen Stirnfläche des Lagerrings verklebt ist, wobei die Breite jeder Axialnut größer als die Materialstärke jedes Befestigungsschenkels ist und jeder Führungsbord durch eine sowohl mit der Außenwand als auch mit der Innenwand der zugehörigen Axialnut in Kontakt stehende Profilierung seines Befestigungsschenkels in der jeweiligen Axialnut radial lagefixierbar ist.

Bevorzugte Ausgestaltungen und vorteilhafte Weiterbildungen des erfindungsgemäß ausgebildeten Lagerrings werden in den Unteransprüchen beschrieben.

Danach ist es gemäß Anspruch 2 bei dem erfindungsgemäß ausgebildeten Lagerring vorgesehen, dass sowohl der Befestigungsschenkel als auch der Bordschenkel jedes Führungsbordes die Form eines regelmäßigen n-eckigen Polygons aufweisen, wobei jeder Befestigungsschenkel mit den Polygonecken an der Außenwand sowie mit der Mitte der Polygonseiten an der Innenwand der Axialnut fixiert ist. Die Ausbildung jedes Führungsbordes als n-eckiges Polygon in seiner Gesamtform hat sich dabei hinsichtlich der Werkzeugkosten für dessen bevorzugt spanlose Fertigung durch Tiefziehen als am kostengünstigsten erwiesen, wobei es jedoch auch möglich ist, die freie Radialkante des Bordschenkels in gewohnter Weise kreisrund auszubilden. Ebenso ist es anstelle der polygonförmigen Ausbildung des Befestigungsschenkels möglich, diesen mit einer sinusartigen Wellenform herzustellen, so dass dieser jeweils mit dessen Wellenbergen an der Außenwand und jeweils mit dessen Wellentälern an der Innenwand der Axialnut fixiert ist.

Nach Anspruch 3 ist es ein weiteres Merkmal des erfindungsgemäß ausgebildeten Lagerrings, dass die Anzahl der Polygonecken der Führungsborde in Abhängigkeit von deren Materialstärke und von der Größe des Lagerrings sowie von den den Umkreis und den Inkreis des Polygons bestimmenden Durchmessern der Außenwände und der Innenwände der Axialnuten in den axialen Stirnflächen des Lagerrings definierbar ist. Eine relativ breite Axialnut und eine geringe Materialstärke des Führungsbordes ermöglicht somit eine Polygonform mit weniger Polygonecken, während eine schmale Axialnut und eine größere Materialstärke des Führungsbordes eine entsprechend vieleckige Polygonform erfordert. Da eine relativ breite Axialnut in den axialen Stirnflächen des Lagerrings jedoch auch eine entsprechende Materialstärke des Lagerrings voraussetzt, kann diese nur in entsprechend große Lagerringe eingearbeitet werden, so dass auch hier wie in den meisten Fällen der Mindestanzahl an Polygonecken eine natürliche Untergrenze gesetzt ist.

Gemäß Anspruch 4 zeichnet sich der erfindungsgemäß ausgebildete Lagerring darüber hinaus noch dadurch aus, dass die umlaufende Axialnut in einer oder beiden axialen Stirnflächen des Lagerrings in ihrer Tiefe größer als die Länge des Befestigungsschenkels jedes Führungsbordes ist und jeder Führungsbord durch Anliegen seines Bordschenkels an einer der axialen Stirnflächen des Lagerrings in der Axialnut axial fixierbar ist. Der Befestigungsschenkel jedes Führungsbordes ragt somit frei in die jeweilige Axialnut in der Stirnfläche des Lagerrings hinein und bietet mit seiner rückseitigen Stirnfläche eine weitere Klebefläche, die zur Erhöhung der Festigkeit der Klebeverbindung beiträgt. Ein Vorteil des direkten Anliegens des Bordschenkels an der axialen Stirnfläche des Lagerrings besteht darüber hinaus darin, dass dadurch bei genauer Fertigung der Lagerringbreite keinerlei durch unterschiedlich dicke Klebstoffschichten bedingte Schwankungen des axialen Führungsspiels für die Wälzkörper, wie sie aus dem Stand der Technik bekannt sind, mehr auftreten können.

Eine zweckmäßige Weiterbildung des erfindungsgemäß ausgebildeten Lagerrings ist es nach Anspruch 5 desweiteren, dass zur Aufnahme von im Lagerbetrieb auftretenden Axialkräften durch die verklebten Führungsborde der Befestigungsschenkel jedes Führungsbordes mindestens eine dem 0,125- bis 0,2-fachen des Außendurchmessers des Bordschenkels jedes Führungsbordes entsprechende Länge aufweist. Der Wert der Länge des Befestigungsschenkels von einem Achtel bis einem Fünftel des Außendurchmessers des Bordschenkels hat sich dabei rein rechnerisch als Optimum für normal auftretende Axialkräfte erwiesen, schließt jedoch nicht aus, bei höheren oder geringeren Axialkräften den Befestigungsschenkel abweichend von diesem Optimum länger oder kürzer auszubilden und die Tiefe der Axialnut in der Stirnfläche des Lagerrings entsprechend anzupassen.

Schließlich wird es als vorteilhafte Ausgestaltung des erfindungsgemäß ausgebildeten Lagerrings durch Anspruch 6 noch vorgeschlagen, dass sämtliche Freiräume innerhalb der Axialnuten in den axialen Stirnflächen des Lagerrings vollständig mit einem Klebstoff, vorzugsweise aus der Gruppe der Zweikomponentenkleber oder aus der Gruppe der anaeroben Klebstoffe, befüllt sind, der optional mit einem kugeligen Füllstoff, beispielsweise Titanoxid oder Aluminiumpulver, vermischt ist. Zweikomponentenkleber zeichnen sich dabei durch gute Alterungsbeständigkeit und hohe Festigkeit bei Temperaturen bis 100°C aus, während anaerobe einkomponentige Klebstoffe für Temperaturen zwischen -60°C und +150°C geeignet sind und sich durch Lösungsmittelfreiheit, Einstellbarkeit ihrer Festigkeit und Aushärtbarkeit durch Metallkontakt unter Abwesenheit von Luftsauerstoff bei Raumtemperatur auszeichnen.

Zusammenfassend weist der erfindungsgemäß ausgebildete Lagerring somit gegenüber den aus dem Stand der Technik bekannten Lagerringen den Vorteil auf, dass dessen mit einem rechtwinkligen Profilquerschnitt ausgebildete Führungsborde durch eine Profilierung am Befestigungsschenkel und durch eine Axialnut in seinen axialen Stirnflächen bereits vor dem Verkleben am Lagerring exakt radial und axial zueinander lagefixiert sind, so dass die Führungsborde bis zum Aushärten des Klebstoffs nicht mehr aus ihrer exakten Position verrutschen können und die Zuhilfenahme gesonderter Hilfsvorrichtungen dafür nicht mehr notwendig ist. Außerdem besteht durch die Anordnung der Axialnuten an den Stirnflächen des Lagerrings nicht mehr die Gefahr, dass überschüssiger Klebstoff auf die Laufbahn der Wälzkörper verdrängt wird und im ausgehärteten Zustand eine einwandfreie Funktion des Wälzlagers behindert. Der Vollständigkeit halber sei jedoch noch erwähnt, dass das beschriebene Verkleben der erfindungsgemäß ausgebildeten Führungsborde am Lagerring auch dann funktioniert, wenn anstelle der Axialnuten in den axialen Stirnflächen des Lagerrings lediglich zwei Absätze in den Rand der äußeren Mantelfläche des Lagerrings eingearbeitet werden und somit quasi zwei nach außen offene Axialnuten entstehen. Die Führungsborde werden dadurch mit ihren polygonförmigen Befes-tigungsschenkeln zwar nur noch auf den Außendurchmessern dieser Absätze lagefixiert und auch die Anzahl der Klebeflächen zwischen den Befestigungsschenkeln und dem Lagerring wird dadurch halbiert, dennoch hat auch diese Befestigung für die axiale Führung der Wälzkörper als ausreichend erwiesen.

### Kurze Beschreibung der Zeichnungen

Eine bevorzugte Ausführungsform des erfindungsgemäß ausgebildeten Lagerrings wird nachfolgend unter Bezugnahme auf die beigefügten Zeichnungen näher erläutert. Dabei zeigen:
- Figur 1: eine Draufsicht auf einen erfindungsgemäß ausgebildeten Lagerring mit polygonförmigen Führungsborden;
- Figur 2: eine vergrößerte Darstellung des Schnittes A - A gemäß Figur 1 durch den erfindungsgemäß ausgebildeten Lagerring;

### Ausführliche Beschreibung der Zeichnungen

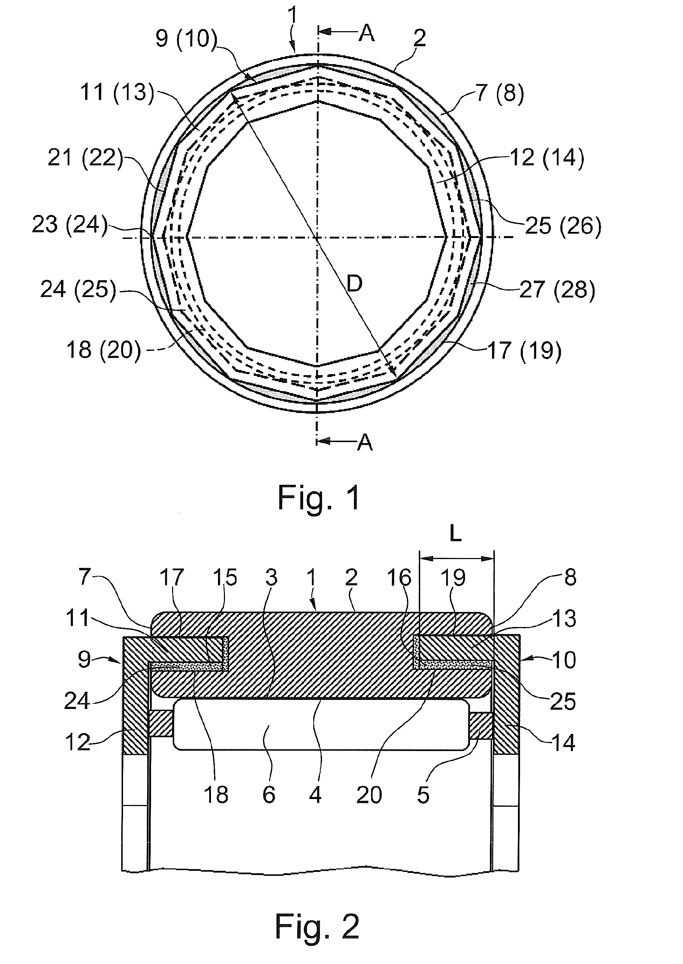

Aus den Figuren 1 und 2 geht deutlich ein äußerer Lagerring 1 eines Radialnadellagers hervor, welcher an seiner radial inneren Mantelfläche 3 eine Laufbahn 4 für einen Satz durch einen Käfig 5 geführter zylindrischer Wälzkörper 6 aufweist und an dessen axialen Stirnflächen 7, 8 zwei die Laufbahn 4 der Wälzkörper 6 axial begrenzende Führungsborde 9, 10 durch Kleben befestigt sind.

In Figur 2 ist darüber hinaus erkennbar, dass jeder Führungsbord 9, 10 erfindungsgemäß einen rechtwinkligen Profilquerschnitt mit einem horizontalen Befestigungsschenkel 11, 13 und einem vertikalen Bordschenkel 12, 14 aufweist und mit seinem horizontalen Befestigungsschenkel 11, 13 jeweils in einer umlaufenden Axialnut 15, 16 in den axialen Stirnflächen 7, 8 des Lagerrings 1 verklebt ist. Ebenso ist deutlich zu sehen, dass dabei die Breite jeder Axialnut 15, 16 größer als die Materialstärke jedes Befestigungsschenkels 11, 13 ist und dass jeder Führungsbord 9, 10 durch eine sowohl mit der Außenwand 17, 19 als auch mit der Innenwand 18, 20 der zugehörigen Axialnut 15, 16 in Kontakt stehende und in Figur 1 dargestellte Profilierung 21, 22 seines Befestigungsschenkels 11, 13 in der jeweiligen Axialnut 15, 16 radial lagefixiert ist. Diese Profilierung 21, 22, mit der deutlich sichtbar auch der Bordschenkel 12, 14 jedes Führungsbordes 9, 10 ausgebildet ist, weist beispielhaft die Form eines regelmäßigen 12-eckigen Polygons 21, 22 auf, wobei jeder Befestigungsschenkel 11, 13 mit den Polygonecken 23, 24 an der Außenwand 17, 19 sowie mit der Mitte der Polygonseiten 25, 26 an der Innenwand 18, 20 der Axialnut 15, 16 fixiert ist. Die Anzahl der Polygonecken 23, 24 der Führungsborde 9, 10 ist jedoch variierbar und hängt vor allem von deren Materialstärke und von der Größe des Lagerrings 1 sowie von den den Umkreis und den Inkreis des Polygons 21, 22 bestimmenden Durchmessern der Außenwände 17, 19 und der Innenwände 18, 20 der Axialnuten 15, 16 in den axialen Stirnflächen 7, 8 des Lagerrings 1 ab.

Weiterhin ist Figur 2 entnehmbar, dass die umlaufenden Axialnuten 15, 16 in beiden axialen Stirnflächen 7, 8 des Lagerrings 1 in ihrer Tiefe größer als die Länge L der Befestigungsschenkel 11, 13 der Führungsborde 9, 10 ist und dass die Führungsborde 9, 10 durch Anliegen ihrer Bordschenkel 12, 14 an den axialen Stirnflächen 7, 8 des Lagerrings 1 in der Axialnut 15, 16 auch axial fixiert sind. Dadurch treten bei genauer Fertigung der Breite des Lagerrings 1 keinerlei Schwankungen des axialen Führungsspiels der Wälzkörper 6 mehr auf. Ebenso zeigt Figur 2 in Zusammenschau mit Figur 1 zumindest andeutungsweise, dass zur Aufnahme von im Lagerbetrieb auftretenden Axialkräften durch die verklebten Führungsborde 9, 10 der Befestigungsschenkel 11, 13 jedes Führungsbordes 9, 10 mindestens eine dem 0,125- bis 0,2-fachen des Außendurchmessers D des Bordschenkels 12, 14 jedes Führungsbordes 9, 10 entsprechende Länge L aufweist.
Durch die graue Darstellung in Figur 1 und die gepunktete Darstellung in Figur 2 geht schließlich aus den Zeichnungen noch hervor, dass sämtliche Freiräume 27, 28 innerhalb der Axialnuten 15, 16 in den axialen Stirnflächen 7, 8 des Lagerrings 1 vollständig mit einem Zweikomponentenklebstoff befüllt sind, der mit Titanoxid als Füllstoff vermischt ist. Dieser Klebstoff zeichnet sich durch gute Alterungsbeständigkeit und hohe Festigkeit aus und ist zur Kosteneinsparung mit dem Titanoxid in einem Verhältnis von 2 zu 1 vermischt.

### Bezugszahlenliste

- 1: Lagerring
- 2: Mantelfläche von 1
- 3: Mantelfläche von 1
- 4: Laufbahn für 6
- 5: Käfig für 6
- 6: Wälzkörper
- 7: Stirnfläche von 1
- 8: Stirnfläche von 1
- 9: Führungsbord
- 10: Führungsbord
- 11: Befestigungsschenkel von 9
- 12: Bordschenkel von 9
- 13: Befestigungsschenkel von 10
- 14: Bordschenkel von 10
- 15: Axialnut in 7
- 16: Axialnut in 8
- 17: Außenwand von 15
- 18: Innenwand von 15
- 19: Außenwand von 16
- 20: Innenwand von 16
- 21: Profilierung / Polygon an 9
- 22: Profilierung / Polygon an 10
- 23: Polygonecken von 9
- 24: Polygonecken von 10
- 25: Polygonseiten von 9
- 26: Polygonseiten von 10
- 27: Freiräume in 15
- 28: Freiräume in 16
- L: Länge von 11, 13
- D: Außendurchmesser von 9, 10

## Patentansprüche

1. Lagerring (1) für ein Radialwälzlager, insbesondere für ein Zylinderrollen-oder Nadellager, welcher an einer seiner radialen Mantelflächen (2, 3) eine Laufbahn (4) für einen Satz vollrolliger oder durch einen Käfig (5) geführter zylindrischer Wälzkörper (6) aufweist und an dessen axialen Stirnflächen (7, 8) ein oder zwei die Laufbahn (4) der Wälzkörper (6) axial begrenzende/r Führungsbord/e (9, 10) durch Kleben befestigt ist/sind, **dadurch gekennzeichnet, dass** jeder Führungsbord (9, 10) einen rechtwinkligen Profilquerschnitt mit einem horizontalen Befestigungsschenkel (11, 13) und einem vertikalen Bordschenkel (12, 14) aufweist und mit seinem horizontalen Befestigungsschenkel (11, 13) jeweils in einer umlaufenden Axialnut (15, 16) in einer axialen Stirnfläche (7, 8) des Lagerrings (1) verklebt ist, wobei die Breite jeder Axialnut (15, 16) größer als die Materialstärke jedes Befestigungsschenkels (11, 13) ist und jeder Führungsbord (9, 10) durch eine sowohl mit der Außenwand (17, 19) als auch mit der Innenwand (18, 20) der zugehörigen Axialnut (15, 16) in Kontakt stehende Profilierung (21, 22) seines Befestigungsschenkels (11, 13) in der jeweiligen Axialnut (15, 16) radial lagefixierbar ist.

2. Lagerring nach Anspruch 1, **dadurch gekennzeichnet, dass** sowohl der Befestigungsschenkel (11, 13) als auch der Bordschenkel (12, 14) jedes Führungsbordes (9, 10) die Form eines regelmäßigen n-eckigen Polygons (21, 22) aufweisen, wobei jeder Befestigungsschenkel (11, 13) mit den Polygonecken (23, 24) an der Außenwand (17, 19) sowie mit der Mitte der Polygonseiten (25, 26) an der Innenwand (18, 20) der Axialnut (15, 16) fixiert ist.

3. Lagerring nach Anspruch 2, **dadurch gekennzeichnet, dass** die Anzahl der Polygonecken (23, 24) der Führungsborde (9, 10) in Abhängigkeit von deren Materialstärke und von der Größe des Lagerrings (1) sowie von den den Umkreis und den Inkreis des Polygons (21, 22) bestimmenden Durchmessern der Außenwände (17, 19) und der Innenwände (18, 20) der Axialnuten (15, 16) in den axialen Stirnflächen (7, 8) des Lagerrings (1) definierbar ist.

4. Lagerring nach Anspruch 1, **dadurch gekennzeichnet, dass** die umlaufende Axialnut (15, 16) in einer oder beiden axialen Stirnflächen (7, 8) des Lagerrings (1) in ihrer Tiefe größer als die Länge (L) des Befestigungsschenkels (11, 13) jedes Führungsbordes (9, 10) ist und jeder Führungsbord (9, 10) durch Anliegen seines Bordschenkels (12, 14) an einer der axialen Stirnflächen (7, 8) des Lagerrings (1) in der Axialnut (15, 16) axial fixierbar ist.

5. Lagerring nach Anspruch 4, **dadurch gekennzeichnet, dass** zur Aufnahme von im Lagerbetrieb auftretenden Axialkräften durch die verklebten Führungsborde (9, 10) der Befestigungsschenkel (11, 13) jedes Führungsbordes (9, 10) mindestens eine dem 0,125- bis 0,2-fachen des Außendurchmessers (D) des Bordschenkels (12, 14) jedes Führungsbordes (9, 10) entsprechende Länge (L) aufweist.

6. Lagerring nach Anspruch 1, **dadurch gekennzeichnet, dass** sämtliche Freiräume (27, 28) innerhalb der Axialnuten (15, 16) in den axialen Stirnflächen (7, 8) des Lagerrings (1) vollständig mit einem Klebstoff, vorzugsweise aus der Gruppe der Zweikomponentenkleber oder aus der Gruppe der anaeroben Klebstoffe, befüllt sind, der optional mit einem kugeligen Füllstoff, beispiels-weise Titanoxid oder Aluminiumpulver, vermischt ist.

## Claims

1. Bearing ring (1) for a radial anti-friction bearing, in particular for a cylindrical roller bearing or needle bearing, which bearing ring (1) has, on one of its radial circumferential faces (2, 3), a raceway (4) for a set of full complement rolling bodies (6) or cylindrical rolling bodies (6) which are guided by a cage (5), and to the axial end faces (7, 8) of which bearing ring (1) one or two guide rims (9, 10) which axially delimits/delimit the raceway (4) of the rolling bodies (6) is/are fastened by way of adhesive bonding, **characterized in that** each guide rim (9, 10) has a right-angled profile cross section with a horizontal fastening limb (11, 13) and a vertical rim limb (12, 14) and is adhesively bonded by way of its horizontal fastening limb (11, 13) in each case in a circumferential axial groove (15, 16) in an axial end face (7, 8) of the bearing ring (1), the width of each axial groove (15, 16) being greater than the material thickness of each fastening limb (11, 13), and it being possible for each guide rim (9, 10) to be positionally fixed radially in the respective axial groove (15, 16) by way of a profiling (21, 22) of its fastening limb (11, 13), which profiling (21, 22) is in contact both with the outer wall (17, 19) and with the inner wall (18, 20) of the associated axial groove (15, 16).

2. Bearing ring according to Claim 1, **characterized in that** both the fastening limb (11, 13) and the rim limb (12, 14) of each guide rim (9, 10) have the shape of a regular n-sided polygon (21, 22), each fastening limb (11, 13) being fixed by way of the polygon corners (23, 24) on the outer wall (17, 19) and by way of the centre of the polygon sides (25, 26) on the inner wall (18, 20) of the axial groove (15, 16).

3. Bearing ring according to Claim 2, **characterized in that** the number of polygon corners (23, 24) of the guide rims (9, 10) can be defined depending on their material thickness and on the size of the bearing ring (1) and on the diameters, which determine the circumcircle and the in-circle of the polygon (21, 22), of the outer walls (17, 19) and the inner walls (18, 20) of the axial grooves (15, 16) in the axial end faces (7, 8) of the bearing ring (1).

4. Bearing ring according to Claim 1, **characterized in that** the depth of the circumferential axial groove (15, 16) in one or both axial end faces (7, 8) of the bearing ring (1) is greater than the length (L) of the fastening limb (11, 13) of each guide rim (9, 10), and each guide rim (9, 10) can be fixed axially in the axial groove (15, 16) by way of its rim limb (12, 14) bearing against one of the axial end faces (7, 8) of the bearing ring (1).

5. Bearing ring according to Claim 4, **characterized in that**, in order to absorb axial forces which occur during bearing operation by way of the adhesively bonded guide rims (9, 10), the fastening limb (11, 13) of each guide rim (9, 10) has at least a length (L) which corresponds to from 0.125 to 0.2 times the external diameter (D) of the rim limb (12, 14) of each guide rim (9, 10).

6. Bearing ring according to Claim 1, **characterized in that** all the clearances (27, 28) within the axial grooves (15, 16) in the axial end faces (7, 8) of the bearing ring (1) are filled completely with an adhesive, preferably from the group of two-component adhesives or from the group of anaerobic adhesives, which adhesive is optionally mixed with a spherical filler, for example titanium oxide or aluminium powder.

## Revendications

1. Bague de palier (1) pour un palier à roulement radial, en particulier pour un palier à rouleaux cylindriques ou un palier à aiguilles, laquelle comprend sur l'une de ses surfaces d'enveloppe radiales (2, 3) un chemin de roulement (4) pour un ensemble de corps de roulement cylindriques (6) jointifs ou guidés par une cage (5), et sur les surfaces frontales axiales (7, 8) de laquelle est/sont fixé(s) par collage un ou deux bords de guidage (9, 10) délimitant axialement le chemin de roulement (4) des corps de roulement (6), **caractérisée en ce que** chaque bord de guidage (9, 10) présente une section transversale de profil à angle droit avec une branche de fixation horizontale (11, 13) et une branche de bord verticale (12, 14) et est collé, par sa branche de fixation horizontale (11, 13), à chaque fois dans une rainure axiale périphérique (15, 16) dans une surface frontale axiale (7, 8) de la bague de palier (1), la largeur de chaque rainure axiale (15, 16) étant supérieure à l'épaisseur de matériau de chaque branche de fixation (11, 13) et chaque bord de guidage (9, 10) pouvant être fixé en position radialement dans la rainure axiale respective (15, 16) par un profilage (21, 22) de sa branche de fixation (11, 13) en contact à la fois avec la paroi extérieure (17, 19) et avec la paroi intérieure (18, 20) de la rainure axiale associée (15, 16).

2. Bague de palier selon la revendication 1, **caractérisée en ce qu'**à la fois la branche de fixation (11, 13) et la branche de bord (12, 14) de chaque bord de guidage (9, 10) présentent la forme d'un polygone régulier à n angles (21, 22), chaque branche de fixation (11, 13) étant fixée avec les angles de polygone (23, 24) sur la paroi extérieure (17, 19) ainsi qu'avec le centre des côtés de polygone (25, 26) sur la paroi intérieure (18, 20) de la rainure axiale (15, 16).

3. Bague de palier selon la revendication 2, **caractérisée en ce que** le nombre des angles de polygone (23, 24) des bords de guidage (9, 10) peut être défini en fonction de leur épaisseur de matériau et de la taille de la bague de palier (1) ainsi que des diamètres, déterminant le cercle circonscrit et le cercle inscrit au polygone (21, 22), des parois extérieures (17, 19) et des parois intérieures (18, 20) des rainures axiales (15, 16) dans les surfaces frontales axiales (7, 8) de la bague de palier (1).

4. Bague de palier selon la revendication 1, **caractérisée en ce que** la profondeur de la rainure axiale périphérique (15, 16) dans l'une des surfaces frontales axiales ou dans les deux surfaces frontales axiales (7, 8) de la bague de palier (1) est supérieure à la longueur (L) de la branche de fixation (11, 13) de chaque bord de guidage (9, 10) et chaque bord de guidage (9, 10) peut être fixé axialement dans la rainure axiale (15, 16) par application de sa branche de bord (12, 14) contre l'une des surfaces frontales axiales (7, 8) de la bague de palier (1).

5. Bague de palier selon la revendication 4, **caractérisée en ce que**, pour la reprise de forces axiales se produisant lors du fonctionnement du palier par les bords de guidage collés (9, 10), la branche de fixation (11, 13) de chaque bord de guidage (9, 10) présente au moins une longueur (L) correspondant à 0,125 à 0,2 fois le diamètre extérieur (D) de la branche de bord (12, 14) de chaque bord de guidage (9, 10).

6. Bague de palier selon la revendication 1, **caractérisée en ce que** tous les espaces libres (27, 28) à l'intérieur des rainures axiales (15, 16) dans les surfaces frontales axiales (7, 8) de la bague de palier (1) sont remplis complètement d'un adhésif, de préférence du groupe des adhésifs à deux composants ou du groupe des adhésifs anaérobie, lequel adhésif est mélangé, de manière facultative, avec une charge sphéroïdale, par exemple de l'oxyde de titane ou de la poudre d'aluminium.
